# EUROPEAN PATENT APPLICATION

(11) **EP 1 361 762 A1**
(43) Date of publication of application: **12.11.2003**
(21) Application number: 02291182.0
(22) Date of filing: 10.05.2002
(51) Int. Cl.: H04Q 3/00, H04M 7/00

(54) **Gateway device and method for managing connections on a gateway device**

(71) Applicant: ALCATEL, 75008 Paris (FR)
(72) Inventor: Dekeyser, Miek Clem Ward Dan, B-2840, Rumst (BE)
(74) Representative: Narmon, Gisèle Marie Thérèse

(57) **Abstract**

Gateway device (21) for mounting as an interface between a concentrator (9) of a switched circuit network and a call server (7) of a time-switched network, the concentrator (9) being provided for handling calls of a plurality of subscribers of different access networks (14-16), the gateway device comprising a series of gateway units (22a-c), each having a media gateway (24a-c) and a first (22a) having a first signalling gateway (23a), each media gateway (24a-c) comprising a number of resources for connecting calls between the concentrator (9) and the call server (7), the first signalling gateway (23a) comprising: memory means for storing assignment data about the resources of each of the media gateways (24a-c); means (26) for receiving a call initiation signal associated with an incoming call originating from any of the subscribers of any of the access networks (14-16); means for selecting and assigning an available resource of any of the media gateways (24a-c) to the incoming call based on the assignment data stored in the memory means; means for storing the assignment of the resource to the incoming call in the memory means; means (25) for receiving a call termination signal associated with a terminated call; means for deleting the assignment of the resource to the terminated call from the memory means.

## Description

The present invention relates to a gateway device according to the preamble of claim 1 and a method for managing connections on a gateway device according to the preamble of claim 4.

The gateway device of the invention is intended for mounting as an interface between a switched circuit network and a time-switched network. In a switched circuit network (SCN), data traffic is carried within channelled bearers of predefined sizes. In a time-switched network, a predetermined number of calls are transferred in time slots over a single data line. Examples of switched circuit networks are public switched telephone networks, public land mobile networks and access nodes. Examples of time-switched networks are internet protocol or intranet protocol (IP) networks.

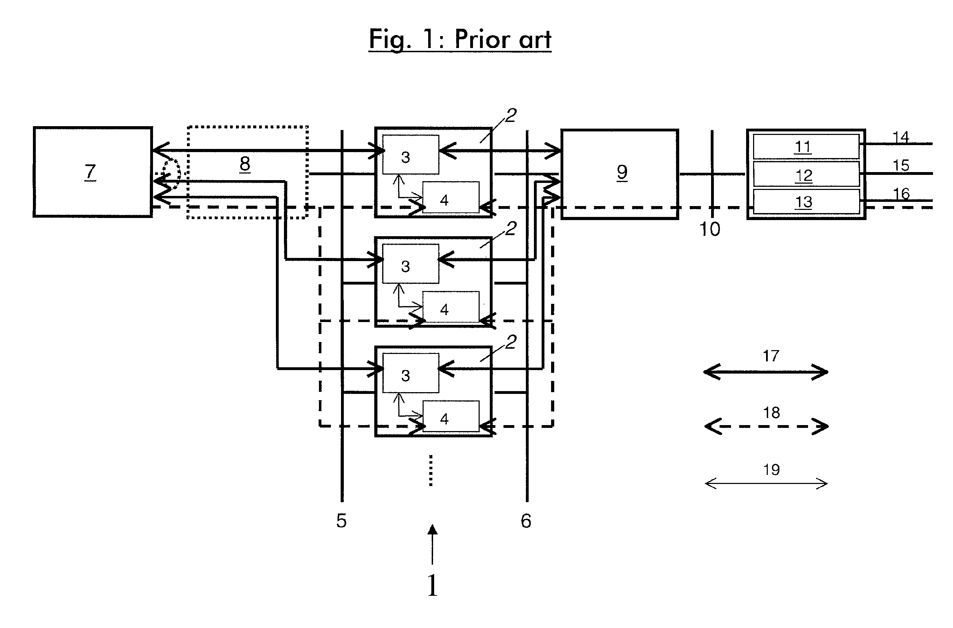

A known gateway device 1 for transferring data between a switched circuit network and an IP network, which is shown in figure 1, comprises a plurality of gateway units 2 which are each capable of handling a (limited) number of connections between the switched circuit network and the IP network. Each gateway unit 2 comprises a signalling gateway 3, which is provided to communicate address data associated to the calls handled by the gateway unit 2, and a media gateway 4 which is provided to transfer the data of the calls handled by the gateway unit 2. During operation, the signalling gateway of each gateway unit communicates with a concentrator 9 on SCN side and a multiplexer 8 on IP side for transferring the address data associated with each call. The concentrator 9 of the switched circuit network is provided for handling calls of different access networks 14-16, each having a number of subscribers. In the prior art method and gateway device 1, which is shown in figure 1, each gateway unit 2 is fixedly associated to one of the access networks 14-16 by configuration. As a result, each gateway unit 2 can only handle calls originating from the subscribers of the access network 14-16 to which it is associated. In other words, the decision on which call is routed via which gateway unit 2 is based solely on the nature or type of the subscriber from whom the call originates, so not based on e.g. the current load in every gateway unit 2. This leads to inefficient use of the processing resources of the gateway units.

It is an aim of the present invention to provide a gateway device of which the resources can be more efficiently used.

This aim is achieved according to the invention with a gateway device having the technical characteristics of the characterising part of claim 1.

The gateway device according to the invention is provided for mounting as an interface between a concentrator of a switched circuit network and a call server of a time-switched network. The gateway device comprises a series of gateway units. Each of the gateway units has a media gateway, which comprises a number of resources for connecting calls between the concentrator and the call server. A first of the gateway units has a first signalling gateway. The first signalling gateway comprises the following components:
- memory means for storing assignment data about the resources of each of the media gateways,
- means for receiving a call initiation signal associated with an incoming call originating from any of the subscribers of any of the access networks,
- means for selecting and assigning an available resource of any of the media gateways to the incoming call based on the assignment data stored in the memory means,
- means for storing the assignment of the resource to the incoming call in the memory means,
- means for receiving a call termination signal associated with a terminated call,
- means for deleting the assignment of the resource to the terminated call from the memory means.

In the gateway device of the invention, the decision on which incoming call is routed via which gateway unit is taken by the first signalling gateway. This first signalling gateway monitors which resources on all of the media gateways are available and is able to select any of the available resources on all of the media gateways and assign the selected resource to an incoming call. In this way, any of the available resources is assignable to the incoming call, irrespective of which subscriber and which access network the incoming call originates from. In the prior art gateway device, it is the concentrator on SCN side which decides which connection is routed via which gateway unit. This decision is taken on an a priori basis, i.e. a number of gateway units are reserved for each access network of the switched circuit network. In the prior art, the operator of the gateway device has to estimate the number gateway units which are to be reserved for a given subscriber in a given period of time. As a result, in the prior art only the available resources on the gateway units which are reserved for a given access network are assignable to an incoming call originating from a subscriber of this access network, whereas in the gateway device of the invention all available resources on any of the media gateways are assignable to the incoming call. As a result, the gateway device of the invention can be used to its full capacity of resources. Furthermore, with the gateway device of the invention, it can be obviated that the operator needs to estimate the amount of resources which are to be reserved for each access network.

Furthermore, in the gateway device of the invention, the operations of monitoring the available resources, selecting resources for assigning calls and making resources available after termination of calls are performed by a single signalling gateway. In this way, there is no longer a need for incorporating a signalling gateway in each of the gateway units, as is the case in the prior art. In this way, the cost of the gateway device of the invention can be reduced.

Still further, the number of interactions which occur between the gateway device on the one hand and concentrator and the call server on the other hand can be reduced with the gateway device of the invention. In the prior art, many interactions occur, as the concentrator and the call server communicate with each of the gateway units for handling the calls. The concentrator and the call server "see" the gateway device as a plurality of small gateway units. With the gateway device of the invention, the concentrator and the call server need only to communicate with a single signalling gateway, i.e. they "see" only a single gateway device.

Preferably, the means for selecting and assigning a resource to an incoming call are provided to perform the assignment based on a degree of occupation of each of the media gateways. This means that an incoming call is preferably assigned to an available resource of the media gateway which has the lowest degree of occupation. In this way, it can be achieved that the degree of occupation of all media gateways is substantially the same at any point in time, which can improve the operation of the device of the invention.

In a preferred embodiment of the gateway device of the invention, a second of the series of gateway units comprises a second signalling gateway similar to the first signalling gateway. This means that the second signalling gateway comprises the components mentioned above with respect to the first signalling gateway. In this way, both the first and the second signalling gateways are able to handle the assignment of calls to available resources on any of the gateways. In this embodiment, the first signalling gateway is provided to perform a master function and the second signalling gateway is provided to perform a slave function. The gateway device further comprises means for transferring the master function from the first signalling gateway to the second signalling gateway. Upon performing the master function, all components of the first signalling gateway are activated, so that the first signalling gateway is the one which manages the connections on the gateway device. While functioning as a slave, the second signalling gateway keeps a copy in its memory means of the assignment data stored in the memory means of the first signalling gateway. In this way, the second signalling gateway is at any time able to take over the master function from the first signalling gateway, in the event of a failure or shutdown of the first gateway unit. Furthermore, as the assignment data are copied, it can be avoided that calls are interrupted when the transfer of the master function takes place. This also has the advantage that, in the event that first gateway unit or any other gateway unit fails or is shut down, the calls which were connected on the media gateway of this gateway unit can be transferred to available resources of the other media gateways. So the master/slave configuration of signalling gateways has the advantage that continued operation of the gateway device can be ensured in the event of a failure or shutdown of any gateway unit, substantially without loss of connected calls.

It is a further aim of the present invention to provide a method for managing connections on a gateway device with which a more efficient use of the resources of the gateway device can be achieved.

This aim is achieved according to the invention with a method having the technical characteristics of the characterising part of claim 4.

The method for managing connections on a gateway device according to the invention comprises the following steps:
a) storing assignment data about the resources of each of the media gateways in memory means provided on the first signalling gateway,
b) communicating a call initiation signal associated with an incoming call originating from any of the subscribers of any of the access networks from the concentrator to the first signalling gateway,
c) selecting and assigning an available resource of any of the media gateways to the incoming call based on the assignment data stored in the memory means,
d) storing the assignment of the resource to the incoming call in the memory means,
e) communicating a call termination signal associated with a terminated call from the call server to the first signalling gateway,
f) deleting the assignment of the resource to the terminated call from the memory means.

In the method for managing connections of the invention, all interactions required for managing the connections on the gateway device occur with a single signalling gateway. This leads to a large reduction in the interactions between the gateway device on the one hand and concentrator and the call server on the other hand. As all assignment data are stored in the memory means provided on the first signalling gateway, this is at any time aware which resources of any media gateway are available and which are occupied. In this way, it is achieved that an incoming call can be assigned to any available resource on any of the media gateways, irrespective of the subscriber and the access network where the incoming call originates. As a result, the gateway device can be used to its full capacity of resources with the method of the invention. Furthermore, there is no longer a need for the operator of the telecommunications network to estimate the amount of resources which are to be reserved for each access network in a given amount of time.

In the method for managing connections according to the invention, the step of selecting and assigning an available resource to an incoming call is preferably based on a degree of occupation of the media gateways. In this way it can be achieved that the number of calls handled by the media gateways is substantially the same at any point in time.

Preferably, the assignment data, which is stored in the memory means of the first signalling gateway, is copied to memory means of a second signalling gateway of a second of the series of gateway units. In this way, the functioning of the first signalling gateway can be taken over by the second signalling gateway in the event of a failure or shutdown of the first signalling gateway. As the assignment data is also provided to the second signalling gateway, the transfer of functioning can occur substantially without hampering the operation of the gateway device and substantially unnoticed in on-going calls.

In the method for managing connections according to the invention, it is preferably also provided that, in the event of a failure or shutdown of any of the media gateways, each call previously assigned to a resource of the failed or shut down media gateway is reassigned to an available resource on any of the remaining media gateways. In this way, a very attractive solution is provided by the method of the invention, as it is usually not just a signalling gateway or a media gateway which fails or is shut down, but the media gateway comprising both the signalling and media gateway as a whole. When this happens, it is provided by the method of the invention that the calls handled by this gateway unit can be transferred to one or more of the other gateway units, avoiding interruption of calls, and that if the gateway unit has the "active" signalling gateway, i.e. the one which manages all connections, its functioning can be transferred to another signalling gateway of another gateway unit.

The invention further relates to a telecommunications network comprising a switched circuit network having a concentrator for handling calls of a plurality of subscribers of different access networks, a time-switched network having a call server, and a gateway device according to any of the claims 1-4 as interface between the switched circuit network and the time-switched network.

The invention will be further elucidated by means of the following description and the appended figures.

Figure 1 shows a scheme of a prior art gateway device and the method for managing the connections on the gateway device.

Figure 2 shows a scheme of a gateway device and a method for managing the connections on the gateway device according to the invention.

Figure 3 shows the scheme of figure 2 in which a first of the gateway units of the gateway device is shut down.

The prior art gateway device 1 shown in figure 1 is mounted as an interface between a call server 7 of an IP network and a concentrator 9 of a switched circuit network (SCN). The concentrator 9 is provided for handling calls of a plurality of subscribers of different access networks 14-16. To this end, the concentrator is connected via a narrowband line card bus 10 to a plurality of line cards 11-13, which in turn are connected to the different access networks 14-16. Examples of such access networks are: a plain old telephone system (POTS) 14 connected via an analogue telephone line card (ATLC) 11, an integrated services digital network with basic access (ISDN BA) 15 connected via a basic access line card (BALC) 12 and an integrated services digital network with primary rate access (ISDN PRA) 16 connected via a primary rate channel card (PRCC) 13. However, the switched circuit network may also comprise any other access network, connected to the concentrator via any other type of line card known to the person skilled in the art. On IP side, a multiplexer 8 is connected between the call server 7 and the gateway device 1 for placing the data received from the gateway device 1 in time slots for transmittal over the IP network. This multiplexer 8 is shown in dotted lines because it does not actively participate in the signalling process for managing the connections on the gateway device. The multiplexer 8 is "transparent" to the signalling between the gateway device 1 and the call server 7.

The gateway device 1 may for example be a voice over IP server card (VISC), or any other gateway device known to the person skilled in the art.

The gateway device 1 comprises a series of gateway units 2, each having a signalling gateway 3 and a media gateway 4. The gateway units 2 are connected to the call server 7 via a first bus 5 and to the concentrator 9 via a second bus 6. The media gateway 4 of each gateway unit 2 has a number of resources on which calls can be transferred and the resources encapsulate the voice data of a call from SCN side into data packets for transmittal over the IP network or vice versa, which is shown by the pay-load flow arrows 18. For ensuring the correct connection, the associated signalling gateway 3 provides the necessary address data associated with a call connected on the media gateway 4 to the call server 7 and the concentrator 9, which is shown by the signalling flow arrows 17, by encapsulating the signalling associated with the call into signalling packets, which are transmitted along with the data packets in the time slots of the IP network, or vice versa. The signalling gateway 3 also controls the media gateway 4, which is shown by the control flow arrows 19, for example to command when to start encapsulating voice into data packets and when to stop.

In the prior art gateway device of figure 1, each signalling gateway 3 is only able to communicate with and control the associated media gateway 4 of the gateway unit 2 in which it is mounted. The network operator estimates the amount of gateway units 2 to be reserved for each access network 14-16. In other words, the network operator guesses how many calls will have to be handled by the gateway device 1 for each access network 14-16. It is clear that this can lead to inefficient use of the processing resources of the gateway units 2. It may for example occur that the gateway units 2 reserved for one access network 14-16 are loaded to their full capacity while other gateway units 2 reserved for a different access network 14-16 are not.

As a result, in the prior art network of figure 1, the concentrator 9 on SCN side and the call server 7 on IP side communicate with each of the signalling gateways 3 for managing the connections on the media gateways 4. This requires a lot of signalling flow 17 and complicates the management of connections on the gateway device 1.

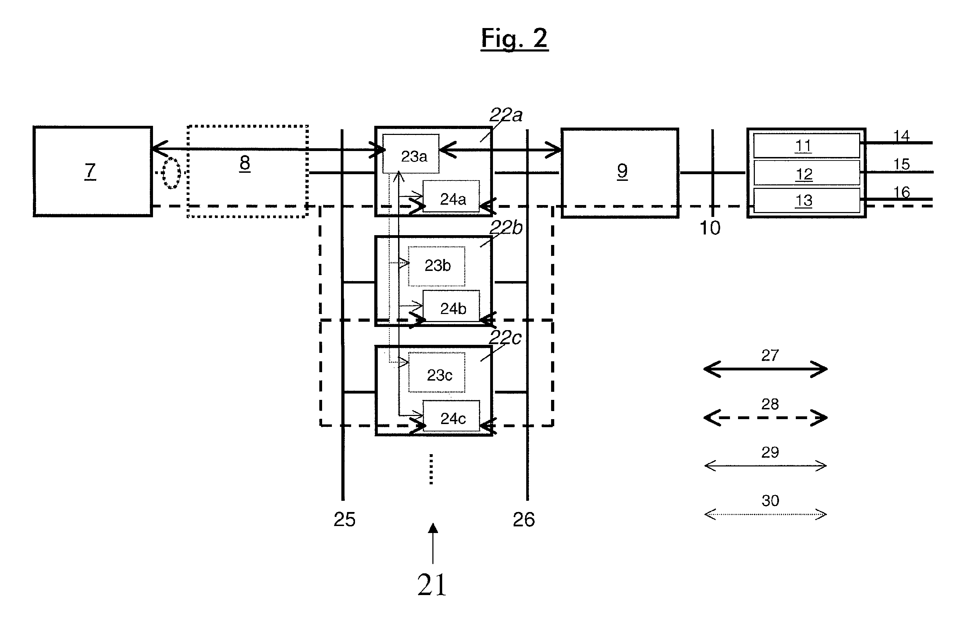

The gateway device 21 of the invention shown in figure 2 also comprises a series of gateway units 22a-c. The gateway device 21 shown comprises three gateway units 22a-c, but it may also comprise two, four or more gateway units. Each gateway unit 22a-c comprises a signalling gateway 23a-c and a media gateway 24a-c. However, the gateway device 21 of the invention differs from the prior art gateway device 1 in that at least the first signalling gateway 23a of the first gateway unit 22a is provided to control each of the media gateways 24a-c for managing connections of calls between SCN and IP. This is shown in figure 2 by the control flow arrows 29, which extend between the first signalling gateway 23a and each of the media gateways 24a. The first signalling gateway 23a is provided to encapsulate the signalling received from the concentrator 9 and associated with each call handled by any of the media gateways 24a-c into signalling packets and transmit them to the call server 7, or vice versa, decapsulate the signalling packets received from the call server 7 into signalling associated with each call and transmit it to the concentrator 9. As a result, the signalling flow 27 in the scheme of figure 2 only takes place between the first signalling gateway 23a and the concentrator 9 and the call server 7. In other words, the IP call server 7 and the SCN concentrator 9 "see" the plurality of gateway units 22a-c as a single integrated gateway unit, which involves a reduction in the interaction for ensuring the correct connections of data lines. This can be derived from figure 2 in that the number of signalling flow arrows 27 is considerably reduced with respect to the prior art scheme of figure 1.

In the scheme of figure 2, the pay-load flow 28 leads to each of the media gateways 24a-c, but as opposed to the prior art, the voice data supplied to each of the media gateways 24a-c can originate from subscribers in any of the access networks 14-16.

For managing the connections on each of the media gateways 24a-c, the first signalling gateway 23a comprises a memory (not shown) for storing assignment data about the resources of each of the media gateways 24a-c. In this way, the first signalling gateway 23a is at any time aware of which call is routed via which resource of which media gateway 24a-c, which resources on which media gateway 24a-c are available and which are occupied. When the first signalling gateway 23a receives a call initiation signal associated with an incoming call, commonly known as an "off-hook", from the concentrator 9 via the second bus 26, it selects an available resource and assigns it to the incoming call, which can originate from any of the subscribers of any of the access networks 14-16. In theory, by the construction of the gateway device 21 of the invention, the first signalling gateway 23a can assign any available resource to the incoming call. It is however preferred that the available resource which is assigned to the call is an available resource of that gateway unit 22a-c which has the lowest degree of occupation, i.e. the highest number of available resources. The assignment of the resource to the call is then stored in the memory, so that the assignment data is updated. When the first signalling gateway 23a receives a call termination signal associated with a terminated call, commonly known as an "on-hook", from the call server 7 via the first bus 5, it simply deletes the assignment of the resource which was previously assigned to the terminated call from the memory, so that the assignment data is updated and the resource becomes available.

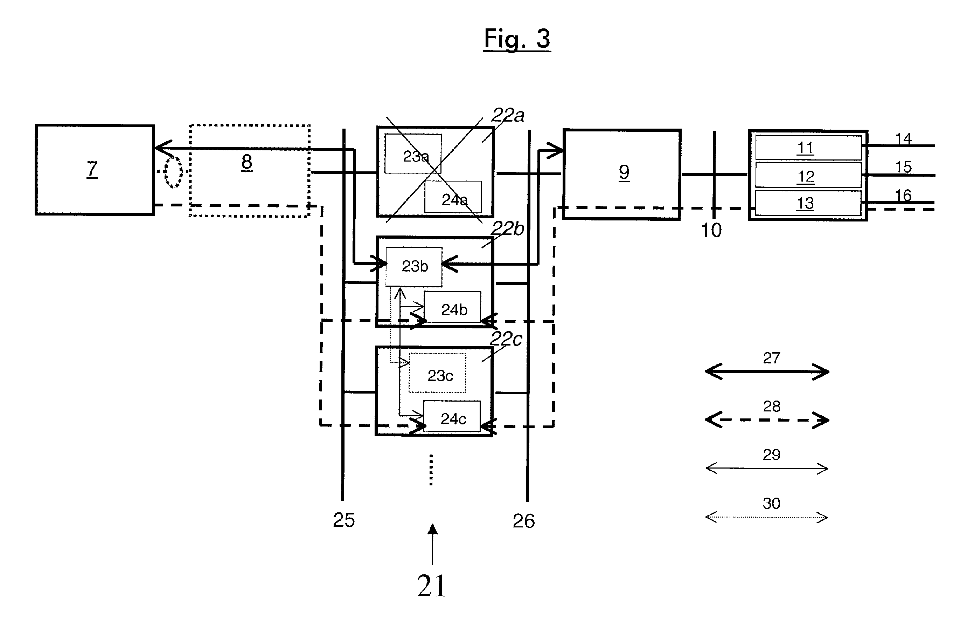

In the gateway device 21 of the invention, as shown in figure 2, it is preferred that each gateway unit 22a-c comprises a signalling gateway 23a-c, of which each is provided to control all the media gateways 24a-c. The second and third signalling gateways 23b and 23c are in fact redundant, as the first signalling gateway is able to control all media gateways 24a-c. However, the signalling gateways 23b and 23c are preferably provided in the gateway device 21 and are preferably also provided to control each of the media gateways 24a-c. In this way, the second and third signalling gateways 23b and 23c are able to take over the functioning of the first signalling gateway 23a in case the latter fails or is shut down by the operator (figure 3). To this end, the second and third signalling gateways 23b and 23c keep their state aligned with the first signalling gateway 23a, which is shown by the redundancy flow arrows 30. This alignment of state means that a copy of the assignment information is stored in the memory of the second and third signalling gateways 23b and 23c. It can be said that, as long as the first signalling gateway 23a is active, it performs a master function and the second and third signalling gateways 23b and 23c perform a slave function, and that, when the first signalling gateway 23a is deactivated, the master function is transferred to, for example, the second signalling gateway 23b.

Figure 3 shows the state of the gateway device 21 with the first signalling gateway 23a being deactivated, which can be for example due to a failure or an operator shutdown. The signalling flow 27 now leads to the second signalling gateway 23b, which has taken over the master function from the first signalling gateway 23a. The third signalling gateway 23c, which still functions as a slave, still keeps its state aligned with the second signalling gateway 23b, so that the third signalling gateway 23c is able to take over the master function in case the second signalling gateway 23b fails or is shut down.

As shown in figure 3, it is commonly a whole gateway unit 22a which fails or is shut down. As in the gateway device 21 of the invention, each signalling gateway 23b-c of the remaining gateway units 22b-c stores a copy of the assignment data, the signalling gateway 23b to which the master function is transferred is aware which calls were handled by the first media gateway 24a before deactivation. As a result, the new master signalling gateway 23b can reassign available resources on the remaining media gateways 24b-c to these calls. Figure 3 shows that the resulting pay-load flow 28 leads to the second and third media gateways 24b and 24c, and no longer to the first media gateway 24a which has been deactivated. A similar process is followed in case of a failure or shutdown of one of the slave gateway units 22b-c, of which the signalling gateway 23b-c is in slave mode. For example, upon failure or shutdown of the second gateway unit 22b, the first or master signalling gateway 23a transfers the calls previously handled by the second media gateway 24b to the remaining media gateways 24a and 24c. To this end, the first signalling gateway 23a reassigns available resources of the first and third signalling gateways 24a and 24c to the calls. In this way, interruption of calls upon failure or shutdown of any of the gateway units 22a-c can be prevented with the gateway device of the invention.

In the scheme of figure 2, connections are managed on the gateway device 21 by the following method. Upon occurrence of an incoming call, which can originate from any of the subscribers of any of the access networks 14-16, a call initiation signal ("off-hook") is communicated from the concentrator 9 to the first signalling gateway 23a. Thereupon, the assignment data about the resources of each of the media gateways, which was previously stored in a memory (not shown) of the first signalling gateway 23a, is consulted and a resource is selected from the available resources of any of the media gateways 24a-c, based on this assignment data. The selected resource is then assigned to the incoming call and the assignment of the resource to the incoming call is stored in the memory, so that this is kept up to date. Upon occurrence of a terminated call, a call termination signal ("on-hook") is communicated from the call server 7 to the first signalling gateway 23a. Thereupon, the assignment of the resource which was previously assigned to the terminated call is deleted from the memory, so that this is kept up to date and the respective resource is made available.

Preferably, the assignment of an available resource to an incoming call is performed based upon a degree of occupation of the media gateways 24a-c. This means that the resource which is assigned to the call is preferably an available resource of the media gateway having the lowest degree of occupation, i.e. the largest number of available resources. This can improve the operation of the gateway device 21.

Preferably, the method of managing connections shown in the scheme of figure 2 further comprises the storing of a copy of the assignment data in the memory of each of the other signalling gateways 23b-c. As has been described above, the first signalling gateway 23a, as long as it is active, can be seen as performing a master function. In the event of a failure or shutdown of the first signalling gateway 23a, all functions performed by the first signalling gateway 23a described above are transferred to, for example, the second signalling gateway 23b, which now becomes the master (see figure 3). By previously copying the assignment data, the transfer of the master function can occur substantially without interruption of calls.

In the event of a failure or shutdown of one of the media gateways 24a-c, for example the media gateway 24a, the method of the scheme of figure 2 preferably provides that an available resource on any of the remaining media gateways 24b-c is reassigned to each call previously assigned to a resource of the failed or shut down media gateway 24a. Naturally, the reassignment data for each call which has been reassigned is stored in the memory of the signalling gateway 23a-c performing the master function, so that this memory is kept up to date. These steps can avoid that any of the calls which are handled by a media gateway 24a which is shut down or fails are interrupted.

## Claims

1. Gateway device (21) for mounting as an interface between a concentrator (9) of a switched circuit network and a call server (7) of a time-switched network, the concentrator (9) being provided for handling calls of a plurality of subscribers of different access networks (14-16), the gateway device comprising a series of gateway units (22a-c), each having a media gateway (24a-c) and a first (22a) having a first signalling gateway (23a), each media gateway (24a-c) comprising a number of resources for connecting calls between the concentrator (9) and the call server (7), **characterised in that** the first signalling gateway (23a) comprises:
- memory means for storing assignment data about the resources of each of the media gateways (24a-c),
- means (6) for receiving a call initiation signal associated with an incoming call originating from any of the subscribers of any of the access networks (14-16),
- means for selecting and assigning an available resource of any of the media gateways (24a-c) to the incoming call based on the assignment data stored in the memory means,
- means for storing the assignment of the resource to the incoming call in the memory means,
- means (5) for receiving a call termination signal associated with a terminated call,
- means for deleting the assignment of the resource to the terminated call from the memory means.

2. Gateway device according to claim 1, **characterised in that** the means for selecting and assigning a resource are provided to perform the assignment based on a degree of occupation of each of the media gateways (24a-c).

3. Gateway device according to claim 1 or 2, **characterised in that** a second (22b) of the series of gateway units comprises a second signalling gateway (23b) similar to the first signalling gateway (23a), the first signalling gateway (23a) being provided to perform a master function in which all its means are activated and the second signalling gateway (23b) being provided to perform a slave function in which its memory means are activated for storing a copy of the assignment data stored in the memory means of the first signalling gateway (23a), the device further comprising means for transferring the master function from the first signalling gateway (23a) to the second signalling gateway (23b).

4. Method for managing connections on a gateway device (21) mounted as an interface between a concentrator (9) of a switched circuit network and a call server (7) of a time-switched network, the concentrator (9) being provided for handling calls of a plurality of subscribers of different access networks (14-16), the gateway device (21) comprising a series of gateway units (22a-c), each having a media gateway (24a-c) and a first (22a) having a first signalling gateway (23a), each media gateway (24a-c) comprising a number of resources for connecting calls between the concentrator (9) and the call server (7), **characterised in that** the method comprises the steps of:
a) storing assignment data about the resources of each of the media gateways (24a-c) in memory means provided on the first signalling gateway (23a),
b) communicating a call initiation signal associated with an incoming call originating from any of the subscribers of any of the access networks (14-16) from the concentrator (9) to the first signalling gateway (23a),
c) selecting and assigning an available resource of any of the media gateways (24a-c) to the incoming call based on the assignment data stored in the memory means,
d) storing the assignment of the resource to the incoming call in the memory means,
e) communicating a call termination signal associated with a terminated call from the call server (7) to the first signalling gateway (23a),
f) deleting the assignment of the resource to the terminated call from the memory means.

5. Method for managing connections according to claim 4, **characterised in that** the assignment in step c) is based on a degree of occupation of each of the media gateways (24a-c).

6. Method for managing connections according to claim 4 or 5, further comprising the following steps:
g) storing a copy of the assignment data in memory means of a second signalling gateway (23b) of a second (22b) of the series of gateway units (22a-c),
h) in the event of a failure or shutdown of the first signalling gateway (23a), transferring all functions performed by the first signalling gateway (23a) in steps a) to f) to the second signalling gateway (23b).

7. Method for managing connections according to any one of the claims 4-6, further comprising the steps of:
i) in the event of a failure or shutdown of any of the media gateways (24a), reassigning an available resource on any of the remaining media gateways (24b-c) to each call previously assigned to a resource of the failed or shut down media gateway (24a),
j) storing the reassignment in the memory means of the first signalling gateway (24a).

8. A telecommunications network comprising a switched circuit network having a concentrator (9) for handling calls of a plurality of subscribers of different access networks (14-16), a time-switched network having a call server (7), **characterised in that** the telecommunications network comprises a gateway device (21) according to any of the claims 1-3 as interface between the switched circuit network and the time-switched network.
